# EUROPÄISCHE PATENTANMELDUNG

(11) **EP 2 661 022 A2**
(43) Veröffentlichungstag der Anmeldung: **06.11.2013**
(21) Anmeldenummer: 13001764.3
(22) Anmeldetag: 05.04.2013
(51) Int. Cl.: H04L 12/28, H04L 29/06, H04M 11/02, H04W 12/06

(54) **Verfahren zur gesicherten Kommunikation zwischen einem mobilen Endgerät und einem Gerät der Gebäudesystemtechnik oder der Türkommunikation**

(30) Priorität: 05.05.2012 DE 102012009128
(71) Anmelder: ABB AG, 68309 Mannheim (DE)
(72) Erfinder: Wegner, Tobias, 44147 Dortmund (DE); Kleine-Cosack, Christian, 44229 Dortmund (DE); Platte, Jörg, 44149 Dortmund (DE)

(57) **Zusammenfassung**

Es wird ein Verfahren zur Kommunikation zwischen einem mobilen Endgerät (2) und einem Gerät (1) der Gebäudesystemtechnik oder der Türkommunikation über eine verschlüsselte und gesicherte Datenverbindung (3) vorgeschlagen, bei welchem wechselseitig jeweils mittels kryptografischer Zertifikate (B, D) belegte Identifikationsmerkmale (A, C) ausgetauscht werden. Eine Berechtigung zur Paarung zwischen dem mobilen Endgerät (2) und einem Gerät (1) der Gebäudesystemtechnik order der Türkommunikation wird mittels einer PIN-Nummer oder eines QR-Codes überprüft.

## Beschreibung

Die Erfindung betrifft ein Verfahren zur Kommunikation zwischen einem mobilen Endgerät und einem Gerät der Gebäudesystemtechnik oder der Türkommunikation.

Aus der EP 2 237 234 A1 sind ein Verfahren und eine Vorrichtung zur Zugangskontrolle bekannt, wobei mit einem Mobiltelefon ein Identifikationscode (beispielsweise ein QR-Code) an einen Zugangsknoten gesendet wird. Falls der Identifikationscode als gültig erkannt wird, wird vom Zugangsknoten an das Mobiltelefon ein Zugangscode gesendet und auf der Anzeige des Mobiltelefons dargestellt. Mit einem optischen Lesegerät wird der Zugangscode erfasst und - falls der Zugangscode als gültig erkannt wird - wird der Zugang gewährt.

Allgemein bekannte Verfahren zur Steuerung von Geräten der Türkommunikation oder der Gebäudesystemtechnik nutzen keinerlei Authentifizierungsmaßnahmen oder Verschlüsselung (beispielsweise KNX-RF: Kommunikation über "radio frequency" (Funksignale), KNX-PL: Kommunikation über "powerline" (230V-Netzleitungen), KNX-TP: Kommunikation über "twisted pair"). Durch die Einbindung mobiler Endgeräte und damit einer möglichen Kommunikation über das Internet ist eine Sicherung der Kommunikation unerlässlich. Hierzu ist eine verschlüsselte Kommunikation mit einer vorherigen Authentifizierung des Kommunikationspartners notwendig.

Der Zugriff auf Geräte der Gebäudesystemtechnik und oder der Türkommunikation durch nicht fest im Gebäude verankerte Geräte erfordert eine Authentifizierung, um eine missbräuchliche Verwendung durch Dritte zu verhindern.

Es existieren verschiedene Verfahren zur Authentifizierung, wie beispielsweise:
- Verwendung von Zugriffsdaten: Passwort und/oder Benutzernamen;
- Verwendung eines "gemeinsames Geheimnisses";
- Beschränkung des Zugriffs auf lokale Adressen;
- SSL / TLS (SSL: Secure Sockets Layer, TLS: Transport Layer Security) für die gesicherte Verbindung auf Internetdienste.

Die Verwendung von Benutzernamen und Passwort ist umständlich, da nur hinreichend lange Passwörter eine ausreichende Sicherheit bieten. Dasselbe gilt für die Verwendung eines "gemeinsamen Geheimnisses". Die Beschränkung des Zugriffs auf lokale Adressen ist zum Einen eine sehr einschränkende Maßnahme und bietet zum Anderen nur einen eingeschränkten Schutz gegen Zugriffe Dritter.

Für die Nutzung von SSL / TLS ist ein vorheriger Austausch von vertrauenswürdigen Zertifikaten notwendig. Des Weiteren müssen die so gesicherten Gegenstellen durch eines dieser vertrauenswürdigen Zertifikate zertifiziert werden. Dazu sind in der Regel die genauen Adressen bzw. die Namen der Geräte notwendig.

Der Erfindung liegt die Aufgabe zugrunde, ein optimiertes Verfahren zur sicheren Kommunikation zwischen einem mobilen Endgerät und einem Gerät der Gebäudesystemtechnik oder der Türkommunikation anzugeben.

Diese Aufgabe wird erfindungsgemäß gelöst durch ein Verfahren zur Kommunikation zwischen einem mobilen Endgerät und einem Gerät der Gebäudesystemtechnik oder der Türkommunikation über eine verschlüsselte und gesicherte Datenverbindung, bei welchem wechselseitig jeweils mittels kryptografischer Zertifikate belegte Identifikationsmerkmale ausgetauscht werden.

Diese Datenverbindung stellt sicher, dass auch bei einer auf dem physikalischen Layer ungesicherten Funkverbindung (z. B. öffentlicher Wireless Hotspot) eine gesicherte Verbindung möglich ist. Neben der Verschlüsselung ist immer auch eine Sicherung (beispielsweise über kryptografische Hashes) notwendig, damit Manipulationen erkannt werden können.

Dabei geschieht eine Paarung zwischen einem mobilen Endgerät und einem Gerät der Gebäudesystemtechnik oder der Türkommunikation, indem das mobile Endgerät in einem ersten Schritt eine verschlüsselte und gesicherte Datenverbindung über eine beliebige IP-fähige Datenverbindung zum Gerät der Gebäudesystemtechnik oder der Türkommunikation herstellt und ein kryptografisches Zertifikat anfordert, worauf in einem zweiten Schritt die Berechtigung des mobilen Endgeräts zur Paarung überprüft wird, worauf in einem dritten Schritt das Gerät der Gebäudesystemtechnik oder der Türkommunikation ein kryptografisches Zertifikat erzeugt, welches ein Identifikationsmerkmal des mobilen Endgeräts zertifiziert und worauf in einem vierten Schritt das Gerät der Gebäudesystemtechnik oder der Türkommunikation das erzeugte kryptografische Zertifikat dem mobilen Endgerät über die verschlüsselte und gesicherte Datenverbindung gemeinsam mit seinem eigenen Identifikationsmerkmal und seinem eigenen kryptografischen Zertifikat zur Verfügung stellt.

Die Berechtigung des mobilen Endgeräts zur Paarung kann dabei überprüft werden,
- indem eine PIN-Nummer abgefragt wird oder
- indem ein "gemeinsames Geheimnis", wie eine "gemeinsame Geheimzahl" abgefragt wird oder
- indem ein QR-Code abgefragt wird.

Als Identifikationsmerkmal des mobilen Endgeräts können verwendet werden:
- die Telefonnummer oder
- die Seriennummer oder
- eine Zufallszahl.

Die mit der Erfindung erzielbaren Vorteile liegen insbesondere darin, dass eine Sicherung der Kommunikation auf Grundlage einer verschlüsselten Kommunikation mit vorheriger Authentifizierung der Kommunikationspartner sichergestellt ist, wodurch eine missbräuchliche Verwendung durch Dritte zuverlässig verhindert wird.

Die Erfindung wird nachfolgend an Hand des in der Zeichnung dargestellten Ausführungsbeispiels näher erläutert.

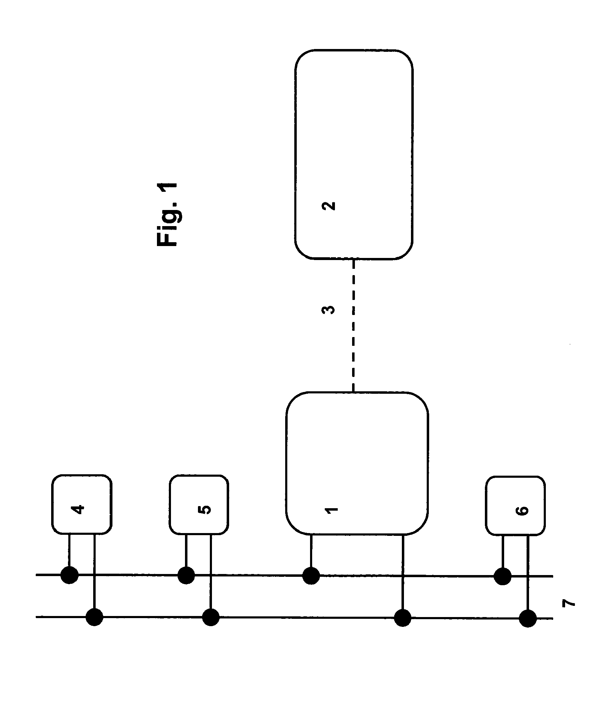

In der Figur 1 sind mehrere Geräte 1, 4, 5, 6 der Gebäudesystemtechnik oder der Türkommunikation dargestellt, welche an ein Bussystem 7 angeschlossen sind, wobei beispielhaft gezeigt ist, dass das Gerät 1 der Gebäudesystemtechnik oder der Türkommunikation mit einem (einen Zugang zum Internet aufweisenden) mobilen Endgerät 2, beispielsweise einem Smartphone, über eine verschlüsselte und gesicherte Datenverbindung 3 kommuniziert.

Es wird vorgeschlagen, die reguläre Kommunikation über die verschlüsselte und gesicherte Datenverbindung 3 zwischen einem mobilen Endgerät 2 und einem Gerät der Gebäudesystemtechnik oder der Türkommunikation, beispielsweise Gerät 1, mittels kryptografischer Methoden abzusichern. Dazu werden bei der Erstverbindung zwischen dem mobilen Endgerät 2 und dem Gerät 1 der Gebäudesystemtechnik oder der Türkommunikation, d. h. "Paarung", kryptografische Zertifikate über die verschlüsselte und gesicherte Datenverbindung 3 ausgetauscht, die in der weiteren Verwendung (reguläre Kommunikation) sowohl das mobile Endgerät 2 gegenüber der Gegenstelle, d. h. dem Gerät 1 der Gebäudesystemtechnik oder der Türkommunikation, als auch umgekehrt sicher und eindeutig ausweisen.

Ein solches kryptografisches Zertifikat ist ein digitaler Datensatz, der bestimmte Eigenschaften von Objekten bestätigt und dessen Authentizität und Integrität durch kryptografische Verfahren geprüft werden kann. Das kryptografische Zertifikat enthält insbesondere die zu seiner Prüfung erforderlichen Daten, d. h. Daten zur Prüfung einer elektronischen Signatur.

Marktübliche mobile Endgeräte 2, beispielsweise Smartphones, unterstützen kryptografische Verfahren. Daher besteht ein wesentliches Ziel des erfindungsgemäßen Vorschlags darin, ein direkt von diesen mobilen Endgeräten 2 nutzbares Authentifizierungs- und Verschlüsselungsschema zu definieren. Hierzu wird SSL / TLS in Verbindung mit dem im Folgenden beschriebenen Verfahren zum Austausch dynamisch generierter kryptografischer Zertifikate im Rahmen der Gebäudesystemtechnik oder der Türkommunikation verwendet.

Nachfolgend wird der Ablauf des Zertifikatsaustausches bei der Paarung, d. h. der Erstverbindung zwischen einem mobilen Endgerät 2 und einem Gerät 1 der Gebäudesystemtechnik oder der Türkommunikation über die verschlüsselte und gesicherte Datenverbindung 3 beschrieben:
1. Die Erstverbindung respektive Paarung geschieht, indem das mobile Endgerät 2 in einem ersten Schritt eine verschlüsselte und gesicherte Datenverbindung 3 zur Gegenstelle, d. h. dem Gerät 1 der Gebäudesystemtechnik oder der Türkommunikation, herstellt und ein kryptografisches Zertifikat D anfordert.
2. In einem zweiten Schritt wird die Berechtigung des mobilen Endgeräts 2 zur Paarung überprüft. Dazu wird überprüft, ob während der Paarung ein direkter physikalischer Zugriff auf das Gerät 1 der Gebäudesystemtechnik oder Türkommunikation gegeben ist. Diese Überprüfung kann beispielsweise über ein bestimmtes Merkmal, beispielsweise eine PIN-Nummer (Persönliche Identifikationsnummer) oder ein "gemeinsamen Geheimnis" / eine "gemeinsame Geheimzahl" oder einen QR-Code (Quick Response) realisiert werden, wobei dieses Merkmal von der Gegenstelle, d. h. dem Gerät 1 der Gebäudesystemtechnik oder der Türkommunikation, angezeigt wird und dann von dem mobilen Endgerät 2 gesendet werden muss. Im Fall einer PIN-Nummer als bestimmtes Merkmal kann diese Ziffernfolge gegenüber einem klassischen "gemeinsamen Geheimnis" oder einer "gemeinsamen Geheimzahl" kurz ausfallen, beispielsweise aus lediglich vier Ziffern bestehen, da hier die Gegenstelle, d. h. das Gerät 1 der Gebäudesystemtechnik oder der Türkommunikation, nur eine limitierte Anzahl von Fehleingaben zulassen kann.
3. Die Gegenstelle, d. h. das Gerät 1 der Gebäudesystemtechnik oder der Türkommunikation, erzeugt in einem dritten Schritt ein kryptografisches Zertifikat D für das mobile Endgerät 2 welches ein Identifikationsmerkmal C, beispielsweise eine Telefonnummer oder eine Seriennummer des mobilen Endgerätes 2 oder eine Zufallszahl zertifiziert.
4. Das Gerät 1 der Gebäudesystemtechnik oder der Türkommunikation stellt in einem vierten Schritt das erzeugte kryptografische Zertifikat D dem mobilen Endgerät 2 über die verschlüsselte und gesicherte Datenverbindung 3 gemeinsam mit seinem eigenen Identifikationsmerkmal A und seinem eigenen kryptografischen Zertifikat B zur Verfügung. Damit ist die Erstverbindung respektive Paarung abgeschlossen.

Nach erfolgter Paarung ist die reguläre Kommunikation zwischen dem mobilen Endgerät 2 und dem Gerät 1 der Gebäudesystemtechnik oder der Türkommunikation über die verschlüsselte und gesicherte Datenverbindung 3 möglich. Nachfolgend wird der Ablauf der gesicherten regulären Kommunikation nach erfolgreicher Paarung beschrieben:
1. Die reguläre Kommunikation findet statt, indem zunächst wahlweise einer der beiden Teilnehmer, d. h. das mobile Endgerät 2 oder das Gerät 1 der Gebäudesystemtechnik oder der Türkommunikation eine verschlüsselte und gesicherte Datenverbindung 3 zu dem jeweils anderen herstellt.
2. Das Identifikationsmerkmal C des mobilen Endgerätes 2 und das Identifikationsmerkmal A des Gerätes 1 der Gebäudesystemtechnik oder der Türkommunikation werden wechselseitig ausgetauscht und mit Hilfe des kryptografischen Zertifikats D des mobilen Endgerätes 2 und des kryptografischen Zertifikats B des Geräts 1 der Gebäudesystemtechnik oder der Türkommunikation jeweils belegt. Hierzu werden SSL / TLS-Standardmechanismen verwendet.
3. Es wird ein Sitzungsschlüssel zur Sicherung der aktuellen verschlüsselten und gesicherten Datenverbindung ausgetauscht.

Ein Sitzungsschlüssel respektive "Session Key" ist ein (für jede Sitzung) einmal verwendeter, zufällig generierter Schlüssel, welcher verwendet wird, um die zu übertragenden Nutzdaten symmetrisch zu verschlüsseln. Der Sitzungsschlüssel selbst wird zufällig erzeugt, danach werden die Nutzdaten damit verschlüsselt und der Sitzungsschlüssel asymmetrisch verschlüsselt. Beides wird dann übertragen.

Somit haben beide Teilnehmer, d. h. sowohl das mobile Endgerät 2 als auch das Gerät 1 der Gebäudesystemtechnik oder der Türkommunikation, die Identität des anderen Teilnehmers überprüft und können über einen gesicherten Kanal regulär miteinander kommunizieren.

Auf diese Weise werden beispielsweise sogenannte "Man-in-the-middle-Attacken" sowie Manipulationen der übertragenen Daten und ein unautorisierter Zugriff wirksam unterbunden. Bei einer "Man-in-the-middle-Attacke" steht der Angreifer logisch zwischen beiden Kommunikationspartnern und hat dabei mit seinem System vollständige Kontrolle über den Datenverkehr zwischen zwei oder mehreren Teilnehmern eines Netzwerkes, so dass er die Informationen nach Belieben einsehen und manipulieren kann. Dabei wird den Kommunikationspartnern das jeweilige Gegenüber vorgetäuscht, ohne dass sie es merken.

### Bezugszeichenliste

- 1: Gerät der Gebäudesystemtechnik oder der Türkommunikation mit Identifikationsmerkmal A und kryptografischem Zertifikat B
- 2: mobiles Endgerät (beispielsweise Smartphone) mit Identifikationsmerkmal C und kryptografischem Zertifikat D
- 3: verschlüsselte und gesicherte Datenverbindung
- 4: weiteres Gerät der Gebäudesystemtechnik oder der Türkommunikation
- 5: weiteres Gerät der Gebäudesystemtechnik oder der Türkommunikation
- 6: weiteres Gerät der Gebäudesystemtechnik oder der Türkommunikation
- 7: Bussystem

## Patentansprüche

1. Verfahren zur Kommunikation zwischen einem mobilen Endgerät (2) und einem Gerät (1) der Gebäudesystemtechnik oder der Türkommunikation über eine verschlüsselte und gesicherte Datenverbindung (3), **dadurch gekennzeichnet, dass** wechselseitig jeweils mittels kryptografischer Zertifikate (B, D) belegte Identifikationsmerkmale (A, C) ausgetauscht werden.

2. Verfahren nach Anspruch 1, **dadurch gekennzeichnet, dass** eine Paarung zwischen einem mobilen Endgerät (2) und einem Gerät (1) der Gebäudesystemtechnik oder der Türkommunikation geschieht, indem das mobile Endgerät (2) in einem ersten Schritt eine verschlüsselte und gesicherte Datenverbindung (3) über eine beliebige IP-fähige Datenverbindung zum Gerät (1) der Gebäudesystemtechnik oder der Türkommunikation herstellt und ein kryptografisches Zertifikat (D) anfordert, worauf in einem zweiten Schritt die Berechtigung des mobilen Endgeräts (2) zur Paarung überprüft wird, worauf in einem dritten Schritt das Gerät (1) der Gebäudesystemtechnik oder der Türkommunikation ein kryptografisches Zertifikat (D) erzeugt, welches ein Identifikationsmerkmal (C) des mobilen Endgeräts (2) zertifiziert und worauf in einem vierten Schritt das Gerät (1) der Gebäudesystemtechnik oder der Türkommunikation das erzeugte kryptografische Zertifikat (D) dem mobilen Endgerät (2) über die verschlüsselte und gesicherte Datenverbindung (3) gemeinsam mit seinem eigenen Identifikationsmerkmal (A) und seinem eigenen kryptografischen Zertifikat (B) zur Verfügung stellt.

3. Verfahren nach Anspruch 2, **dadurch gekennzeichnet, dass** die Berechtigung des mobilen Endgeräts (2) zur Paarung überprüft wird, indem eine PIN-Nummer abgefragt wird.

4. Verfahren nach Anspruch 2, **dadurch gekennzeichnet, dass** die Berechtigung des mobilen Endgeräts (2) zur Paarung überprüft wird, indem ein "gemeinsames Geheimnis", wie eine "gemeinsame Geheimzahl" abgefragt wird.

5. Verfahren nach Anspruch 2, **dadurch gekennzeichnet, dass** die Berechtigung des mobilen Endgeräts (2) zur Paarung überprüft wird, indem ein QR-Code abgefragt wird.

6. Verfahren nach Anspruch 1, **dadurch gekennzeichnet, dass** als Identifikationsmerkmal (C) des mobilen Endgeräts (2) die Telefonnummer verwendet wird.

7. Verfahren nach Anspruch 1, **dadurch gekennzeichnet, dass** als Identifikationsmerkmal (C) des mobilen Endgeräts (2) die Seriennummer verwendet wird.

8. Verfahren nach Anspruch 1, **dadurch gekennzeichnet, dass** als Identifikationsmerkmal (C) des mobilen Endgeräts (2) eine Zufallszahl verwendet wird.
